# EUROPÄISCHE PATENTSCHRIFT

(11) **EP 2 386 776 B1**
(45) Veröffentlichungstag und Bekanntmachung des Hinweises auf die Patenterteilung: **10.07.2013**
(21) Anmeldenummer: 11003777.7
(22) Anmeldetag: 09.05.2011
(51) Int. Cl.: F16F 9/06, F16F 9/32

(54) **Dämpfer für ein Fahrrad**
Damper for a bicycle
Amortisseur pour un vélo

(30) Priorität: 14.05.2010 DE 102010020478
(43) Veröffentlichungstag der Anmeldung: 16.11.2011
(73) Patentinhaber: DT Swiss AG, 2500 Biel (CH)
(72) Erfinder: Achenbach, Martin, 2504 Biel/Bienne (CH)
(74) Vertreter: Schütte, Hartmut

(56) Entgegenhaltungen:
- DE-A1- 10 122 729
- DE-A1- 10 251 212
- DE-A1- 10 251 213
- US-A1- 2006 065 496
- US-B2- 7 219 881

## Beschreibung

Die vorliegende Erfindung betrifft einen Dämpfer für ein Fahrrad und insbesondere einen Pull-Shock-Dämpfer für ein Fahrrad, welcher insbesondere zur Dämpfung von Stößen am Hinterrad eines Fahrrads eingesetzt wird. Ein Pull-Shock-Dämpfer ist ein Dämpfer, bei dem die Kolbenstange aus dem Dämpfergehäuse herausgezogen wird, wenn das Rad einfedert. Bei konventionellen Dämpfern hingegen taucht die Kolbenstange beim Einfedern des Rades in das Dämpfergehäuse ein. Obwohl im Folgenden die Erfindung im Wesentlichen mit Bezug auf Pull-Shock-Dämpfer beschrieben wird, ist der Einsatz der Erfindung allerdings auch bei konventionellen Dämpfern möglich.

Im Stand der Technik ist beispielsweise mit der US 7,219,881 B2 ein Pull-Shock-Dämpfer bekannt geworden, der dort mit Bezug auf Fig. 31 beschrieben wird. Der bekannte Dämpfer weist eine gasgefüllte Negativfeder und zwei mit Öl und Gas gefüllte Positivfedern auf. Die Negativfeder dient zur Linearisierung des Kennlinienverlaufs des Dämpfers. Insgesamt sind bei dem bekannten Dämpfer drei Luftkammern vorgesehen, deren Fülldrücke über separate Ventile einzeln einzustellen sind. Aufgrund der erforderlichen Dämpfungscharakteristik ist dabei für den Betrieb ein günstiger Fülldruck in der Negativkammer um etwa 30% niedriger als in der Positivkammer.

Es hat sich herausgestellt, dass aufgrund der vielfältigen Einstellungsmöalichkeiten gegebenenfalls auch erfahrene Benutzer an solchen Dämpfern ungeeignete Druckverhältnisse einstellen, was die Fahreigenschaften beeinträchtigt und zu unerwünschten Federungs- und Dämpfungsergebnissen führt, da die Kraft der Negativfeder oft zu groß oder zu klein ist.

Es ist deshalb die Aufgabe der vorliegenden Erfindung, einen Dämpfer für ein Fahrrad und insbesondere einen Pull-Shock-Dämpfer für ein Fahrrad zur Verfügung zu stellen, der einfachere Einstellmöglichkeiten erlaubt.

Diese Aufgabe wird gelöst durch einen Dämpfer mit den Merkmalen des Anspruchs 1. Bevorzugte Weiterbildungen und Ausgestaltungen der Erfindung sind Gegenstand der Unteransprüche. Weitere Vorteile und Merkmale des erfindungsgemäßen Dämpfers ergeben sich aus den Ausführungsbeispielen.

Ein erfindungsgemäßer Dämpfer ist für den Einsatz an einem Fahrrad vorgesehen und insbesondere als Pull-Shock-Dämpfer ausgeführt. Der erfindungsgemäße Dämpfer umfasst wenigstens eine Federeinrichtung und wenigstens eine Dämpfereinrichtung. Die Federeinrichtung umfasst wenigstens eine Positivfeder und wenigstens eine Negativfeder mit wenigstens einer gasbetriebenen Negativkammer. Die Dämpfereinrichtung umfasst wenigstens eine erste Ölkammer und wenigstens eine damit über insbesondere wenigstens einen Strömungskanal verbundene zweite Ölkammer. Dabei grenzt die Negativkammer über einen Trennkolben an die erste Ölkammer. Der Trennkolben ist fest mit der Kolbenstange verbunden. Wenigstens eine Rohrstruktur erstreckt sich von dem Trennkolben durch das Innere der Negativkammer bis wenigstens zu dem Ende der Negativkammer hin. Die Negativkammer ist gegenüber der Rohrstruktur gasdicht abgedichtet. Die Kolbenstange des Trennkolbens erstreckt sich durch die erste Ölkammer hindurch nach außen.

Der erfindungsgemäße Dämpfer hat viele Vorteile. Ein erheblicher Vorteil des erfindungsgemäßen Dämpfers besteht darin, dass die auf den Trennkolben von der Negativkammer aus wirkende Kraft geringer ist als ohne Rohrstruktur. Die Negativkammer ist gegenüber der Rohrstruktur gasdicht abgedichtet. Der Innendruck innerhalb der Rohrstruktur ist deutlich geringer als in der Negativkammer. Dadurch wird die auf den Trennkolben wirksame Kraft erheblich verringert. Diese Ausgestaltung ermöglicht es bei gleichbleibenden Außenabmessungen und gleichen auf den Trennkolben wirkenden Kräften den Innendruck in der Negativkammer zu erhöhen. Insbesondere ermöglicht es diese Ausgestaltung auch, den Innendruck in der Negativkammer im Befüllungszustand gleich dem Innendruck in einer gasbetriebenen Positivkammer zu setzen. Das ermöglicht ein besonders einfaches Einstellen des Dämpfers, da der Benutzer den Druck in der Negativkammer und in einer gegebenenfalls vorhandenen Positivkammer in gleicher Höhe einstellen kann und damit optimale Ergebnisse erzielt.

Bei dem erfindungsgemäßen Dämpfer erstreckt sich die Rohrstruktur von dem Kolben bzw. Trennkolben durch das Innere der Negativkammer bis zu dem dem Trennkolben gegenüberliegenden Ende der Negativkammer. Dieses Ende kann beispielsweise auch als erstes Ende bezeichnet werden. Die Kolbenstange des Trennkolbens erstreckt sich dann durch das dem ersten Ende gegenüberliegende zweite Ende hindurch nach außen. Die Rohrstruktur ist fest mit dem Trennkolben verbunden. Der Trennkolben wirkt als Pumpenkolben und ist vorzugsweise dicht ausgeführt, sodass kein Fluid durch den Trennkolben strömt.

Insbesondere sind die erste Negativkammer und die erste Ölkammer zusammen in einem Gehäuse oder Gehäuseteil angeordnet.

Auf der einen Seite des Trennkolbens befindet sich die Negativkammer. Auf der anderen Seite des Trennkolbens ist die Ölkammer und insbesondere die erste Ölkammer angeordnet.

In besonders bevorzugten Weiterbildungen umfasst die Rohrstruktur wenigstens zwei miteinander gasdicht verbundene und teleskopierbare Rohre, die sich wenigstens von dem Trennkolben aus bis zu dem gegenüberliegenden Ende der Negativkammer hin erstrecken. Das Innere der Rohrstruktur ist gasdicht gegenüber der Negativkammer abgedichtet. Dadurch wird gewährleistet, dass die wirksame Fläche, die den in der Negativkammer herrschenden Druck auf den Trennkolben ausübt, um die Querschnittsfläche der Rohrstruktur geringer ist. In dem Inneren der Rohrstruktur herrscht insbesondere Umgebungsdruck oder nur ein leichter Überdruck. Durch Komprimierung der Negativkammer kann sich auch der im Inneren der Rohrstruktur herrschende Druck verändern und insbesondere vergrößern. Da aber der in der Negativkammer herrschende Druck typischerweise 10 oder 20 bar oder mehr beträgt, während der im Inneren der Rohrstruktur herrschende Druck im Grundzustand etwa 1 oder 2 bar beträgt, trägt das Innere der Rohrstruktur nur in einem sehr geringen Maße zu der auf den Trennkolben einwirkenden Kraft bei.

Durch den Einsatz der Rohrstruktur wird es auf einfache Art und Weise ermöglicht, die auf den Trennkolben wirksame Kraft in gleicher Höhe beizubehalten, während der Innendruck im Grundzustand in der Negativkammer erheblich vergrößert wird.

Typischerweise wird in der Negativkammer bei konventionellen Dämpfern ein Druck eingestellt, der im Grundzustand um etwa 30% niedriger ist als der Druck in der Positivkammer. Durch die Erfindung wird es ermöglicht, den Druck in der Negativkammer gleich groß wie in der Positivkammer zu wählen, wobei durch die reduzierte wirksame Fläche die wirksame Kraft genauso groß ist, wie im Stand der Technik, wo die wirksame Fläche größer und der herrschende Druck kleiner war.

Vorzugsweise ist ein Außendurchmesser und insbesondere ein wirksamer Außendurchmesser der Rohrstruktur größer als ein Außendurchmesser der Kolbenstange. Dadurch wird gewährleistet, dass die von der Negativkammer auf den Trennkolben einwirkende effektive Kraft verringert wird. Besonders bevorzugt ist ein Durchmesserverhältnis zwischen wirksamen Durchmesser der Rohrstruktur und Außendurchmesser der Kolbenstange größer als 12:10, insbesondere größer 15:10. Bei einem runden Querschnitt und einem Durchmesserverhältnis von 15:10 wird ein Flächenverhältnis von 2,25 erreicht. Damit wird die effektiv wirkende Kraft ganz erheblich reduziert.

In einer Ausgestaltung liegt das Durchmesserverhältnis zwischen 18:10 und 22:10 bei z. B. 20:10, wobei sich ein Flächenverhältnis von 4:1 ergibt.

Unabhängig von der Formgestaltung der Kolbenstange und der Formgestaltung der Rohrstruktur ist es ebenfalls besonders bevorzugt, dass die wirksame Fläche der Rohrstruktur größer als die wirksame Querschnittsfläche der Kolbenstange ist. Insbesondere ist das Flächenverhältnis des Querschnitts der wirksamen Rohrstruktur zu der Querschnittsfläche der Kolbenstange größer 15:10 und insbesondere größer als 20:10 und besonders bevorzugt größer als 30:10. Die wirksame Fläche der Rohrstruktur entspricht dem Flächenanteil, der keinen bedeutenden Druck auf den Trennkolben in Richtung der ersten Ölkammer ausübt.

In einer bevorzugten Weiterbildung erstreckt sich die Rohrstruktur durch das Ende der Negativkammer hindurch nach außen. Bei einer solchen Ausgestaltung ist es nicht nötig, dass die Rohrstruktur teleskopierbar ausgebildet ist. In dieser Ausgestaltung ist die Rohrstruktur zu der Negativkammer abgedichtet, um eine lang andauernde und wirksame Dichtung der Negativkammer zu ermöglichen. Insbesondere bei solchen Weiterbildungen ist ein wirksamer Durchmesser der Rohrstruktur größer als ein wirksamer Durchmesser der Kolbenstange und/oder es ist eine effektive Fläche der Rohrstruktur größer als eine effektive Fläche der Kolbenstange. Dadurch wird gewährleistet, dass die effektive Kraft der Negativfeder bei gleichbleibendem Innendruck verringert wird.

In allen Ausgestaltungen ist es besonders bevorzugt, dass die Positivfeder wenigstens eine gasbetriebene Positivkammer umfasst.

Es ist möglich, dass die Negativkammer der Negativfeder nur mit Gas gefüllt ist. Möglich ist es aber auch, dass die Negativkammer zum Teil mit einer elastischen Feder gefüllt ist oder dass auch ein Fluidanteil in der Negativkammer enthalten ist.

In der Positivkammer wird die federnde Wirkung insbesondere wenigstens teilweise durch ein Gas erzeugt. Möglich ist es aber auch, dass in der Positivkammer noch wenigstens eine elastische Feder oder dergleichen vorhanden ist.

In besonders vorteilhaften Ausgestaltungen ist ein insbesondere gemeinsames Luftventil an dem Dämpfer vorgesehen, welches zur Befüllung der Negativkammer und wenigstens einer Positivkammer dient. Dabei sind die Negativkammer und die Positivkammer gleichzeitig über das gemeinsame Luftventil befüllbar. Dadurch wird es ermöglicht, dass die Negativkammer und die Positivkammer bei der Befüllung immer auf das gleiche Druckniveau gefüllt werden. Das erleichtert die Einstellungen und die Konfigurierbarkeit des Dämpfers erheblich, da Fehleinstellungen durch ungeeignete Druckverhältnisse in der Negativkammer und der Positivkammer zuverlässig vermieden werden.

Dazu ist das Luftventil über wenigstens einen Kanal mit der Negativkammer und der Positivkammer verbunden. Insbesondere ist das Luftventil über einen ersten Kanal mit der Negativkammer und über einen zweiten Kanal mit der Positivkammer verbunden, um bei der Luftbefüllung und der Negativkammer im Wesentlichen den gleichen Druck wie in der Positivkammer einzustellen. Bei geschlossenem Luftventil besteht hingegen keine und insbesondere keine ständig offene Strömungsverbindung zwischen der Positivkammer und der Negativkammer über die Kanäle.

In allen Ausgestaltungen ist es bevorzugt, dass zwischen der ersten Ölkammer und der zweiten Ölkammer eine einstellbare Drosseleinrichtung mit wenigstens einem Drosselventil vorgesehen ist. Insbesondere ist es möglich, wenigstens ein Drosselventil für die High-Speed-Dämpfung und wenigstens ein Drosselventil für die Low-Speed-Dämpfung für die Druckstufe und/oder die Zugstufe bereitzustellen. Bevorzugterweise ist ein Lock-Out-Ventil zur Absperrung der Verbindung vorgesehen.

In allen Ausgestaltungen kann eine Positivkammer von der zweiten Ölkammer durch eine Trenneinrichtung getrennt sein. Möglich ist es aber auch, dass die zweite Ölkammer und die Positivkammer als gemeinsame Kammer ausgebildet sind. Die Trenneinrichtung ist als Trennkolben ausgeführt oder kann einen solchen umfassen.

Möglich und bevorzugt ist es auch, wenn die zweite Ölkammer durch eine flexible Trenneinrichtung von der Positivkammer getrennt wird. Zum Beispiel kann die zweite Ölkammer durch eine Gummiblase oder eine Membran von der Positivkammer getrennt sein.

Vorzugsweise ist die zweite Ölkammer in einem Gehäuseteil mit der Positivkammer angeordnet, wobei die zweite Ölkammer durch eine Trenneinrichtung in Form z.B. eines Trennkolbens von der Positivkammer getrennt ist. Möglich und bevorzugt ist es auch, dass eine dritte Ölkammer und eine zweite Positivkammer vorgesehen sind, die miteinander zusammenwirken und voneinander gegebenenfalls durch eine zweite Trenneinrichtung oder durch einen zweiten Trennkolben getrennt sind. Wenn eine erste und wenigstens eine zweite Positivkammer vorgesehen sind, ist es bevorzugt, dass die erste Positivkammer mit der zweiten Ölkammer und die zweite Positivkammer mit der dritten Ölkammer zusammenwirkt.

Möglich ist auch der Einsatz wenigstens einer weiteren Ölkammer und einer zweiten Negativkammer, die voneinander durch eine weitere Trenneinrichtung getrennt sind. In solchen Ausgestaltungen ist es möglich, sowohl die Charakteristik der Negativfederung als auch die der Positivfederung durch Einstellen bzw. Zu- oder Abschalten einzelner Negativ- oder Positivkammern weitestgehend zu beeinflussen.

Insbesondere ist es bevorzugt, dass die Progression der Positivfeder veränderbar ist. Dazu kann wenigstens eine Positivkammer zuschaltbar ausgebildet sein.

Möglich und bevorzugt ist es auch, dass wenigstens zwei Positivkammern mit unterschiedlich wirksamen Durchmessern oder unterschiedlichen und/oder einstellbaren Längen vorgesehen sind, um die Progression der Positivkammer bzw. des Dämpfers gezielt weitestgehend einzustellen.

In allen Ausgestaltungen weist der Dämpfer vorzugsweise wenigstens ein Ventil zur Entlüftung des Inneren der Rohrstruktur auf. Falls Gas aus z. B. der Negativkammer in das Innere der Rohrstruktur gelangen und sich der dort herrschende Druck erhöhen sollte, kann das Innere entlüftet werden. Das Ventil kann als manuelles oder auch als automatisches Entlüftungsventil ausgeführt sein und einen Ventilkanal direkt nach außen zur Umgebung aufweisen.

Weitere Vorteile und Merkmale der Erfindung ergeben sich aus den Ausführungsbeispielen, welche im Folgenden mit Bezug auf die beiliegenden Figuren erläutert werden.

In den Figuren zeigen:
- Fig. 1: eine schematische Darstellung eines erfindungsgemäßen Dämpfers im Schnitt;
- Fig. 2: einen schematischen Querschnitt durch den Dämpfer nach Fig. 1 mit geschlossenem Lock-Out-Ventil;

- Fig. 3: eine stark schematische Draufsicht auf den Dämpfer nach Fig. 1;
- Fig. 4: einen Querschnitt durch ein weiteres Ausführungsbeispiel eines erfindungsgemäßen Dämpfers;
- Fig. 5: eine stark schematische Draufsicht auf noch ein Ausführungsbeispiel eines erfindungsgemäßen Dämpfers;
- Fig. 6: den Dämpfer nach Fig. 5 in einer ersten Federstellung;
- Fig. 7: den Dämpfer nach Fig. 5 in einer zweiten Federstellung;
- Fig. 8: das Füllventil in geschlossener Stellung;
- Fig. 9: das Füllventil in geöffneter Stellung;
- Fig. 10: eine perspektivische Ansicht des Dämpfers nach Fig. 5;
- Fig. 11: einen Querschnitt durch ein weiteres Ausführungsbeispiel eines erfindungsgemäßen Dämpfers; und
- Fig. 12: einen Querschnitt durch ein weiteres Ausführungsbeispiel eines erfindungsgemäßen Dämpfers.

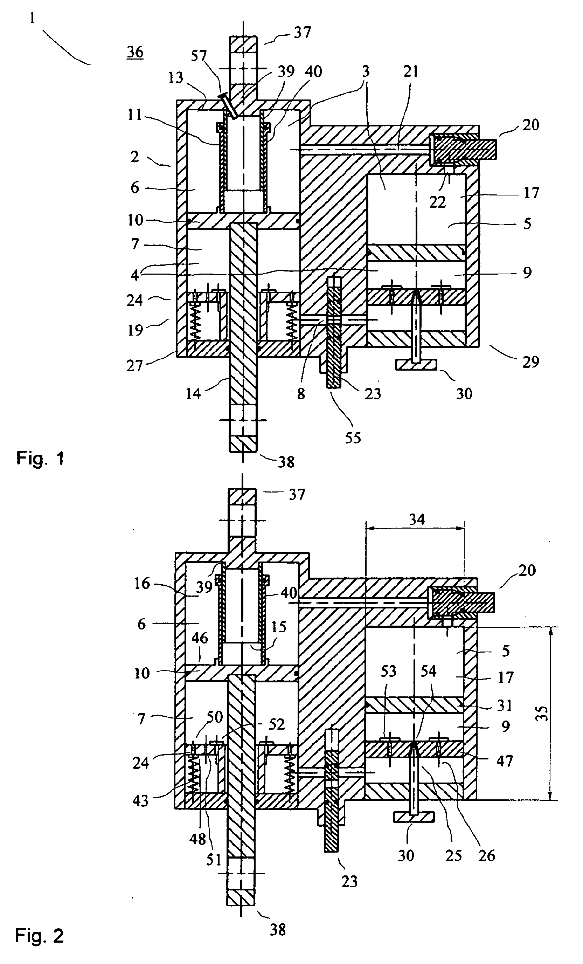

Mit Bezug auf die Fig. 1 bis 3 wird zunächst ein erstes Ausführungsbeispiel eines erfindungsgemäßen Dämpfers 1 beschrieben.

Der in Fig. 1 in einem schematischen Schnitt dargestellte Dämpfer 1 ist als Pull-Shock-Dämpfer 2 ausgeführt und umfasst hier zwei Gehäuseteile 27 und 28, die an einem Gehäuse 19 vorgesehen sind. An dem Gehäuseteil 27 sind das erste Anschlussende 37 und das zweite Anschlussende 38 zum Anschluss an einen Fahrradrahmen angeordnet.

Typischerweise wird ein solcher Pull-Shock-Dämpfer 2 über eine wippenartige Struktur mit dem Hinterrad eines Fahrrads verbunden, sodass an einem Ende der Wippe beispielsweise das Gehäuseteil 37 angeordnet ist, während an dem anderen Ende der Wippe das Hinterrad angeschlossen ist. Durch eine wippenartige Ausgestaltung wird es erreicht, dass beim Einfedern des Hinterrades die Kolbenstange 14 aus dem Gehäuseteil 27 herausgezogen wird. Dadurch wird das sich in der Ölkammer 7 befindende Dämpfungsmedium durch die Drosseleinrichtung 24 und den Strömungskanal 8 zu der zweiten Ölkammer 9 transportiert. Der Trennkolben 31 in dem Gehäuseteil 28 wird entsprechend verschoben und das Volumen der Positivkammer 17 der Positivfeder 5 komprimiert.

Die Federeinrichtung 3 des Pull-Shock-Dämpfers 2 umfasst hier eine Negativkammer 6 in dem Gehäuseteil 27 und eine Positivkammer 17 in dem Gehäuseteil 28, die räumlich voneinander getrennt sind.

Die Befüllung sowohl der Positivkammer 17 als auch der Negativkammer 6 erfolgt über das Luftventil 20, welches über einen Kanal 21 mit der Negativkamner 6 und über einen Kanal 22 mit der Positivkammer 17 verbunden ist. Diese Ausgestaltung führt dazu, dass bei Luftbefüllung mit dem Luftventil 20 immer sowohl die Negativkammer 6 als auch die Positivkammer 17 mit dem gleichen Luftdruck befüllt werden. Bei geschlossenem Luftventil werden die Kanäle 21 und 22 und somit die Negativkammern 6 und die Positivkammern 17 voneinander getrennt, sodass dann ein Druckausgleich über die Kanäle 21 und 22 nicht mehr möglich ist.

Trotz der vorgegebenen Querschnitte der Negativkammer 6 und der Positivkammer 17 wird die in der Negativkammer 6 auf den Trennkolben 10 wirkende Kraft begrenzt, indem ein Flächenanteil 15 ausgespart wird. Der Flächenanteil 15 wird durch das erste Rohr 39 der Rohrstruktur 11 abgedeckt, sodass dort der Innendruck in der Negativkammer 6 nicht auf den Trennkolben 10 einwirken kann. Dazu ist die Rohrstruktur 11 gasdicht gegenüber dem Innenraum 12 der Negativkammer 6 abgedichtet. Die Ringfläche 46 des Trennkolbens 10, auf den der Druck im Innenraum 12 der Negativkammer 6 einwirkt, wird erheblich reduziert.

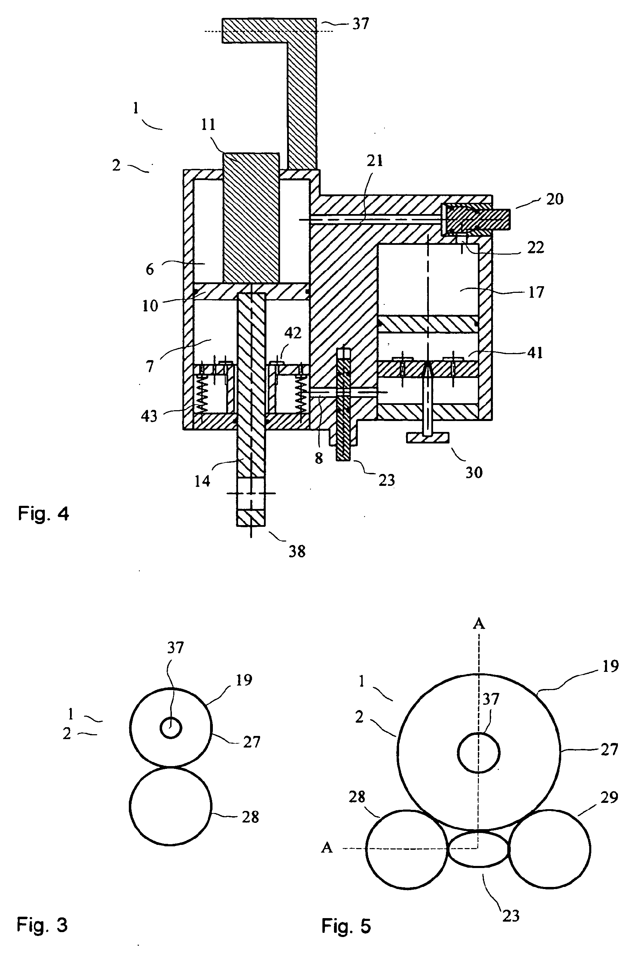

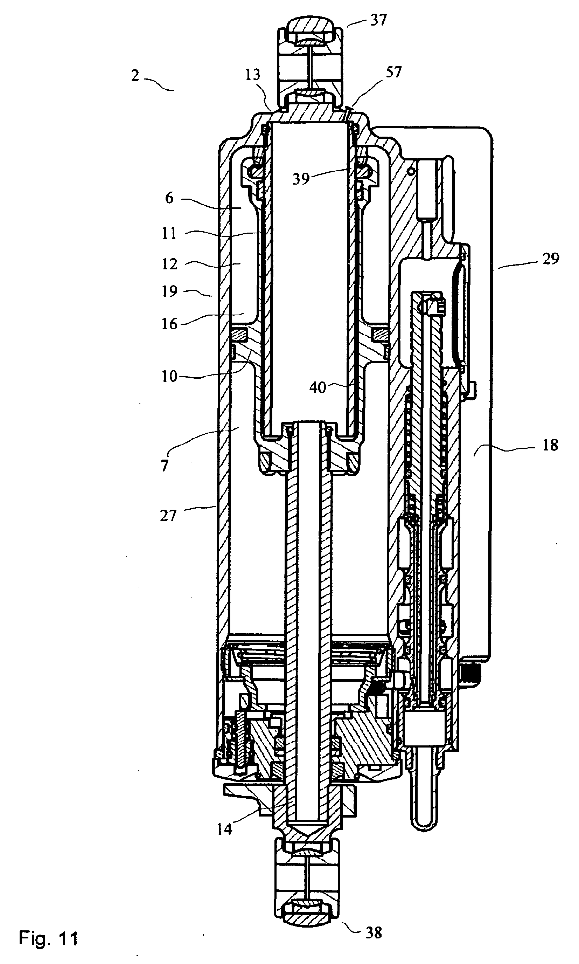

Zur Entlüftung der Rohstruktur kann ein Ventil 57 vorgesehen sein, welches mit Bezug auf Fig. 11 noch näher erläutert wird.Die Rohstruktur 11 ist in den Ausführungsbeispielen nach den Figuren 1 bis 3 und 5 bis 10 am Ende 13 der Negativkammer 6 an das Gehäuse 19 und auch jeweils an das Gehäuseteil 27 angeschlossen und dort damit dicht verbunden. Dadurch wird sicher gestellt, dass der Flächenanteil 15 ausgespart wird und keine bedeutende Kraft in Richtung der ersten Ölkammer 7 ausübt. Im Ausführungsbeispiel nach Fig. 4 wird die Rohrstruktur 11 dichtend durch das Ende 13 nach außen geführt. Dort übt der durch die Rohrstruktur 11 gebildete Flächenanteil ebenfalls keine bedeutende und hier auch keine nennenswerte Kraft auf den Trennkolben 10 in Richtung der ersten Ölkammer 7 aus.

Der Flächenanteil 15 ist größer als eine Querschnittsfläche der insbesondere rund ausgebildeten Kolbenstange 15 und ist insbesondere wenigstens doppelt so groß. Mit einem drei-, vier- oder fünffachen Querschnitt wurden gute Erfahrungen gemacht.

Dadurch kann trotz im Grundzustand gleich hoher Befüllungsdrücke in der Negativkammer 6 und der Positivkammer 17 ein geeignetes und optimales Druck- und Kräfteverhältnis zwischen der Negativkammer 6 und der Positivkammer 17 eingestellt werden. Es wird zuverlässig vermieden, dass der Benutzer ungewollte Einstellungen vornimmt, die die Federeigenschaften des Dämpfers 1 ungünstig beeinflussen.

Zwischen der ersten Ölkammer 7 und der zweiten Ölkammer 9 ist eine Drosseleinrichtung 24 für die Druckstufe vorgesehen, die eine Reihe von Drosselventilen umfasst. Die High-Speed Drosselventile 49 für die Druckstufe umfassen Kanäle 50, Vorbelastungsfedern 43 und Shims 48. Ein High-Speed Drosselventil 49 für die Druckstufe öffnet, wenn die Druckdifferenz zwischen Negativkammer und Positivkammer ein bestimmtes Maß überschreitet. Das Drosselventil 51 für die Low-Speed-Druckstufe kann neben einem Kanal ebenfalls Federn und Shims umfassen. Durch das Drosselventil 51 für die Low-Speed-Druckstufe strömt auch bei geringen Druckdifferenzen Öl. Das High-Speed Drosselventil 49 für die Druckstufe öffnet hingegen nur bei größeren Belastungen. Rückschlagventile 52 mit Shims 42 öffnen für rückströmendes Öl.

Zwischen der ersten Ölkammer 7 und der zweiten Ölkammer 9 ist weiterhin eine Drosseleinrichtung 47 für die Zugstufe vorgesehen, die ebenfalls eine Reihe von Drosselventilen umfasst. Das Drosselventil 54 für die Zugstufe umfasst wenigstens einen Strömungskanal 25 und ein Einstellrad 30 oder einen Einstellhebel oder eine sonstige Einstelleinrichtung oder dergleichen zur Veränderung des Strömungsquerschnittes des Strömungskanals. An weiteren Ventilen können Vorbelastungsfedern und Shims 42 vorgesehen sein. Die Ventile 53 dienen als Rückschlagventile und sind mit Strömungskanälen 26 und Shims 42 ausgerüstet.

Zwischen der ersten Ölkammer 7 und der zweiten Ölkammer 9 kann ein Einstellventil 23 z.B. in dem Strömungskanal 8 vorgesehen sein, und auch als Lock-Out-Ventil dienen. Das Einstellventil 23 ist in der in Fig. 1 gezeigten Stellung geöffnet und erlaubt somit eine Strömungsverbindung zwischen der ersten Ölkammer 7 und der zweiten Ölkammer 9, während es in der Darstellung gemäß Fig. 2 geschlossen ist und den Strömungskanal 8 blockiert. Auch eine teilweise Schließung des Strömungskanals 8 ist möglich.

Die Rohrstruktur 11 besteht im Ausführungsbeispiel gemäß den Fig. 1 bis 3 aus einer teleskopartigen Struktur mit einem Innenrohr 39 und einem darauf gleitenden Außenrohr 40, welche durch entsprechende Dichtungen gegeneinander abgedichtet sind, um den Innenraum der Rohrstruktur 11 dauerhaft vor dem in der Negativkammer 6 herrschenden Druck abzuschotten. Der Durchmesser des Innenrohres 29 bestimmt hier die wirksame Fläche 15.

Um die Federcharakteristik der Positivfeder 5 insgesamt und/oder die Progression der Positivkammer 17 gezielt zu beeinflussen, kann die effektive Länge 35 der Positivkammer 17 veränderbar ausgeführt sein. Möglich ist es auch, den Innendurchmesser 34 der Positivkammer 17 zu verändern. In Ausgestaltungen, wie z. B. im Ausführungsbeispiel nach Fig. 5 kann gegebenenfalls die Länge 35 einzelner oder aller Positivkammern 17 und 18 einstellbar sein. Eine größere Länge 35 bewirkt eine geringere Progression, während die Feder bei geringeren Längen 35 und ansonsten konstanten Bedingungen eine steilere Kennlinie aufweist. Durch gezieltes Kombinieren einzelner Positivkammern 17 und 18 ist so eine flexible Einstellung möglich.

Die in Fig. 3 schematisch dargestellte Draufsicht zeigt das Gehäuse 19 mit den beiden Gehäuseteilen 27 und 28 des Dämpfers 1.

In Fig. 4 ist eine Variation der Ausführungsform gemäß der Fig. 1 bis 3 abgebildet, wobei hier die Rohrstruktur als einzelnes Rohr ausgebildet ist, welches sich aus der Negativkammer 6 bis nach draußen in die Umgebung 36 erstreckt. Das Gehäuseteil 27 ist über eine entsprechende Dichtung gegenüber der Rohrstruktur 11 abgedichtet. Die Rohrstruktur 11 ist insbesondere innen hohl ausgebildet, um das Gewicht zu verringern.

Bei einer solchen Ausgestaltung ist eine teleskopartige Rohrstruktur 11 nicht erforderlich, da die Rohrstruktur 11 beim Eintauchen des Trennkolbens 10 in das Gehäuseteil 27 dementsprechend weit am anderen Ende 13 aus dem Gehäuseteil 27 austaucht. Hier bestimmt der Außendurchmesser der Rohstruktur 11 die wirksame Fläche 15.

Der Außendurchmesser der Rohrstruktur 11 ist hier größer als der Außendurchmesser der Kolbenstange 14. Das Verhältnis der Außendurchmesser ist insbesondere größer als 12:10 und vorzugsweise größer als 15:10. Das Verhältnis der Querschnittsfläche 15 der Rohrstruktur 11 zu der Querschnittsfläche der Kolbenstange 14 ist größer als 1 und insbesondere größer als 1,5 vorzugsweise größer als 2 oder auch 3.

Im Übrigen entsprechen die Anordnung der einzelnen Bauteile und deren Funktion dem Ausführungsbeispiel gemäß der Fig. 1 bis 3.

Mit Bezug auf die Fig. 5 bis 10 wird im Folgenden ein weiteres Ausführungsbeispiel eines erfindungsgemäßen und als Pull-Shock-Dämpfers 2 ausgeführten Dämpfers 1 beschrieben. Dabei zeigt Fig. 5 eine stark schematische Draufsicht auf den Pull-Shock-Dämpfer 2, der hier im Ausführungsbeispiel drei Gehäuseteile 27, 28 und 29 an dem Gehäuse 19 aufweist. Hier ist es vorgesehen, dass das erste Anschlussende 37 und das zweite Anschlussende 38 am Gehäuseteil 27 vorgesehen sind.

Während in dem Gehäuseteil 27 hier die Negativfeder 6 und die erste Ölkammer 7 vorgesehen sind, sind in den Gehäuseteilen 28 und 29 jeweils eine Positivkammer 17 und eine Positivkammer 18 und eine zweite Ölkammer 9 und eine dritte Ölkammer 32 vorgesehen. Dabei kann die erste Positivkammer 17 von der zweiten Ölkammer 9 durch eine als Trennkolben 31 ausgebildete Trenneinrichtung getrennt sein. Ebenso kann die zweite Positivkammer 18 von der dritten Ölkammer 32 durch eine Trenneinrichtung getrennt sein, die hier als zweiter Trennkolben 33 ausgebildet ist.

Die Trenneinrichtung kann auch als Membran oder Gummiblase oder dergleichen flexibel ausgebildet sein.

Je nach Ausgestaltung ist es auch möglich, dass die zweite Ölkammer 9 mit der Positivkammer 17 eine gemeinsame Kammer bildet und dass die dritte Ölkammer 32 mit der zweiten Positivkammer 18 eine gemeinsame Kammer bildet. Die Trennung von Luft und Öl erfolgt dort dann über Schwerkraft.

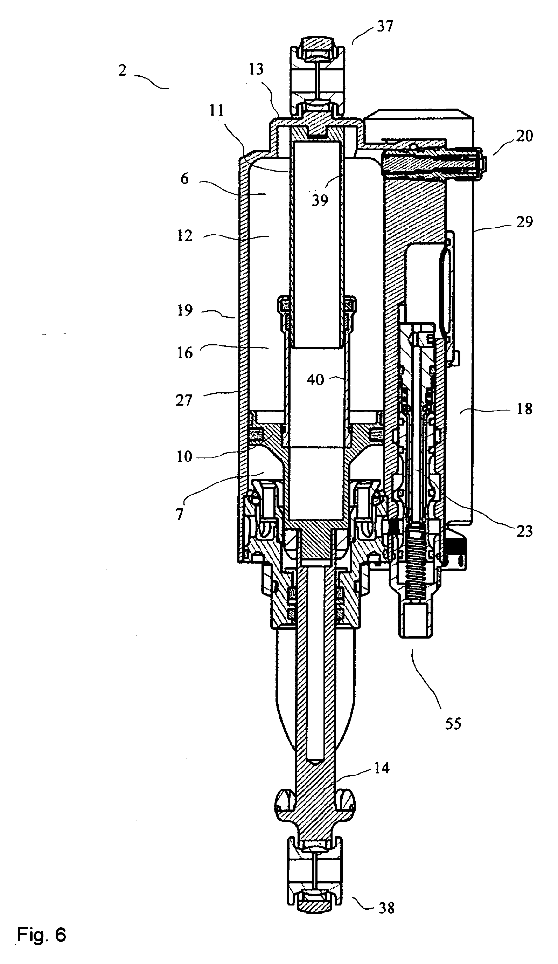

Der in Fig. 6 in einer ersten Federstellung im Schnitt A - A nach Fig. 5 dargestellte Pull-Shock-Dämpfer 2 umfasst wiederum eine Rohrstruktur 11, die zwei teleskopierbare Rohre 39 und 40 umfasst, die durch eine Dichtung gegeneinander und zum Innenraum 12 der Negativkammer 6 hin abgedichtet sind.

Obwohl in dieser Ausgestaltung der Pull-Shock-Dämpfer 2 zwei Gehäuseteile 28 und 29 mit darin angeordneten Positivkammern 17 und 18 aufweist, ist durch die Lage des Schnittes gemäß Fig. 6 bedingt nur das Gehäuseteil 27 mit der Negativfeder 6 und das Gehäuseteil 29 mit der Positivkammer 18 sichtbar.

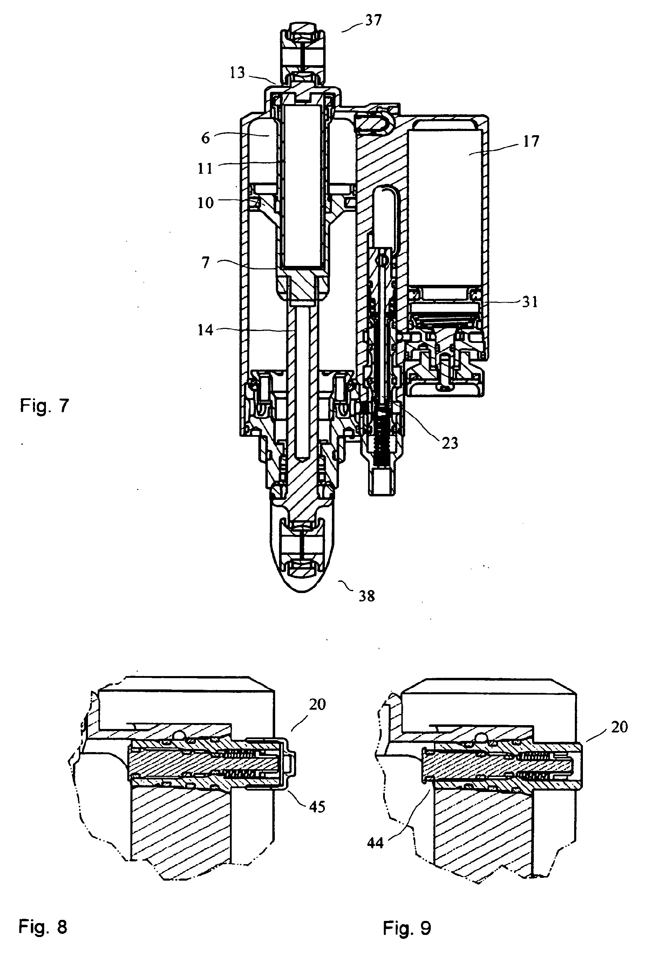

Fig. 7 zeigt den Dämpfer gemäß Fig. 5 und 6 mit einer weiter eingefahrenen Kolbenstange 14. Deutlich ist zu erkennen, dass die teleskopierbaren Rohre 39 und 40 der Rohrstruktur weit ineinander eingefahren sind und den Innenraum in der Rohrstruktur 11 zuverlässig gegenüber der Negativkammer 6 abdichten.

Fig. 8 zeigt das Luftventil 20 des Pull-Shock-Dämpfers 2 aus den Fig. 5 - 7 in geschlossener Stellung, wobei eine Abschlusskappe 45 zum Schutz des Luftventils 20 aufgeschraubt ist.

Fig. 9 zeigt das Luftventil 20 in geöffneter Stellung, in der eine Öffnung 44 zum Innenraum hin besteht. Auch hier sind Kanäle 21 und 22 vorgesehen, die das Luftventil 20 mit der Negativkammer 6 bzw. den Positivkammern 17 und 18 verbindet. In diesem Zustand sind alle Positiv- und Negativkammern miteinander und mit dem Luftventil verbunden, so dass ein gemeinsames Befüllen und/oder definiertes Druckablassen möglich ist. Dadurch wird beim Befüllen immer der gleiche Druck in der Negativkammer 6 und den Positivkammern 17 und 18 erzeugt.

Insgesamt wird durch die Erfindung ein einfach aufgebauter Dämpfer 1 zur Verfügung gestellt, der es mit nur einem gemeinsamen Luftventil erlaubt, sowohl die Negativkammer 6 als auch die Positivkammern 17 und 18 zu befüllen. Falsche Einstellungen durch zu große oder zu geringe Drücke in der Positiv- oder Negativkammer werden dadurch zuverlässig vermieden.

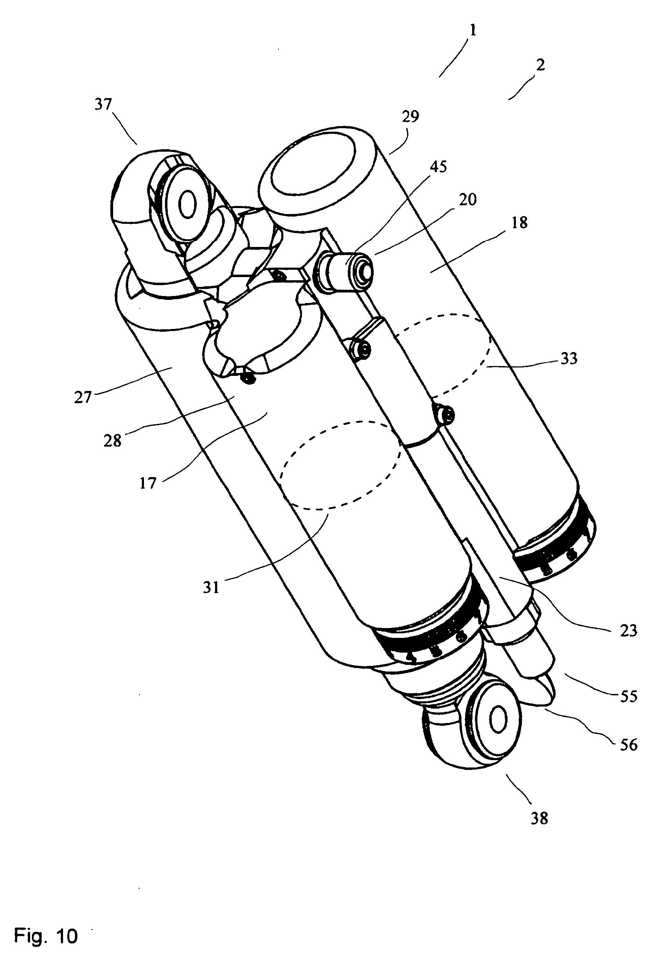

Fig. 10 zeigt in einer perspektivischen und eingeschnittenen Ansicht den Dämpfer 1 mit den Gehäuseteilen 27, 28 und 29, sowie dem Gehäuseteil mit dem Einstellventil 23. Mit dem Einstellventil 23 kann eine oder es können beide Positivkammern 17 und 18 der Positivfeder 5 zu- oder abgeschaltet werden, um die Feder- und Dämpfungseigenschaften zu beeinflussen. Bei Sperrung beider Positivkammern 17 und 18 wird ein Lockout bewirkt. Hier im Ausführungsbeispiel ist das Einstellventil 23 linear in Längsrichtung beweglich ausgeführt, um durch Linearverschiebung die Positivkammern 17 und 18 zu- bzw. abzuschalten. Möglich ist auch der Einsatz eines drehbaren Bedienteils 55 oder eines drehbaren Einstellventils 23 oder eine Fernbedienung über ein Kabel 56 vom Lenker aus.

Gegebenenfalls ist es nicht nur möglich, die Positivkammern 17 und 18 einzeln zu- und abzuschalten, sondern es kann auch möglich sein, die Querschnitte der Verbindungskanäle zu den Positivkammern 17 und 18 gezielt zu verändern.

In dem Gehäuseteil 28 ist eine Trenneinrichtung als erster Trennkolben 31 vorgesehen, um die erste Positivkammer 17 von der zweiten Ölkammer 9 zu trennen. In dem Gehäuseteil 29 ist eine zweite Trenneinrichtung vorgesehen, die hier als zweiter Trennkolben 33 ausgebildet ist. Der zweite Trennkolben 33 trennt die zweite Positivkammer 18 von der dritten Ölkammer 32.

Fig. 11 zeigt einen Querschnitt durch einen weiteren erfindungsgemäßen Dämpfer 2.

Der in Fig. 11 dargestellte Pull-Shock-Dämpfer 2 entspricht äußerlich im Wesentlichen dem Dämpfer 2 nach Fig. 6 oder Fig. 10 und umfasst insbesondere auch zwei Positivkammern 17 und 18. Die Positivkammer 18 ist in dem Gehäuseteil 29 angeordnet. Eine Rohrstruktur 11 ist in der Negativkammer 6 angeordnet. Die Rohrstruktur umfasst zwei teleskopierbare Rohre 39 und 40, die durch eine Dichtung gegeneinander und zum Innenraum 12 der Negativkammer 6 hin abgedichtet sind.

Das äußere Rohr 40 der Rohrstruktur 11 ist hier einstückig mit dem als Trennkolben 10 ausgeführtem Kolben ausgebildet. Dadurch wird die Anzahl der Teile verringert. Auch die Anzahl der Dichtungen kann reduziert werden.

In allen Ausführungsvarianten kann ein Ventil 57 als Überströmventil oder Überdruckventil vorgesehen sein, welches das Innere der Rohrstruktur 11 direkt oder indirekt mit der Umgebung verbindet. Der Ventilkanal des Ventils 57 kann direkt durch die Gehäusewandung nach außen vorgesehen sein oder aber sich auch durch das Ende 13 erstrecken. Das Ventil 57 öffnet vorzugsweise automatisch, wenn ein erheblicher Überdruck im Inneren der Rohrstruktur 11 entstehen sollte. Durch eventuelle geringfügige Undichtigkeiten kann im Laufe des Betriebs Gas aus der Negativkammer in das Innere der Rohrstruktur übertreten, wodurch die Funktionsweise auf Dauer verringert oder beeinträchtigt werden könnte.

Ein als manuelles Ventil ausgeführtes Ventil 57 erlaubt das manuelle Ablassen bei Bedarf oder beispielsweise bei einer routinemäßigen Wartung oder Inspektion. Wenn das Ventil 57 als automatisches Überdruckventil ausgeführt ist, öffnet es und lässt Gas nach außen entweichen, wenn der Druck im Inneren der Rohrstruktur 11 beispielsweise zwei, drei oder vier bar erreicht oder überschritten hat. Dadurch kann ein noch zuverlässiger Betrieb sicher gestellt werden.

Auch die Dämpfer gemäß der anderen Ausführungsbeispiele können mit einem entsprechenden Ventil 57 ausgerüstet sein.

Im Übrigen entspricht der Aufbau des Dämpfers 2 nach Fig. 11 dem Aufbau der Dämpfer der anderen Ausführungsbeispiele.

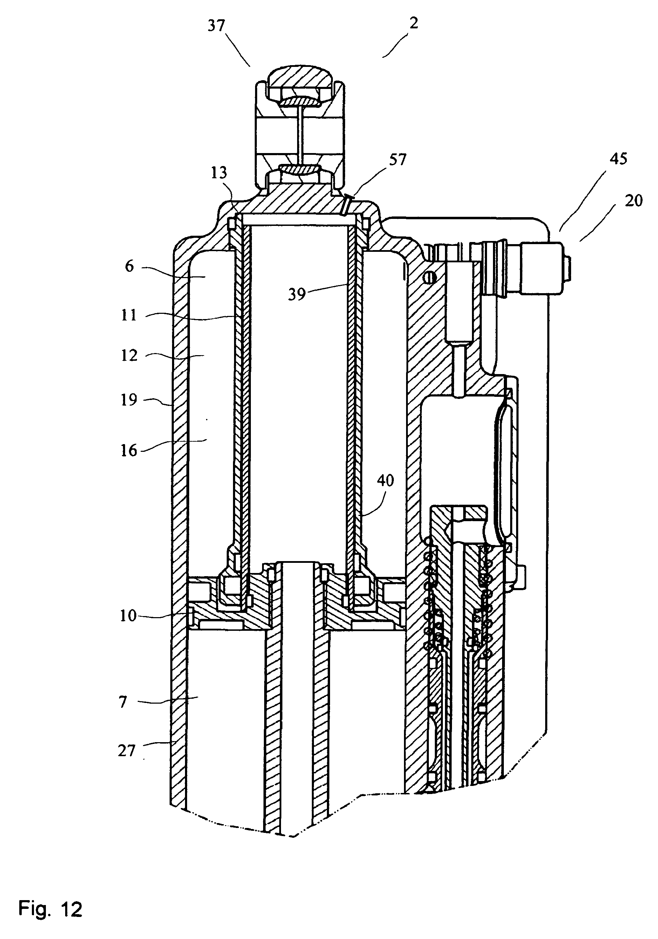

Fig. 12 zeigt einen Teilschnitt durch ein weiteres Ausführungsbeispiel eines Dämpfers 2. Die Rohrstruktur 11 des Dämpfers ist teleskopierbar aufgebaut und umfasst wiederum ein Innenrohr 39 und ein Außenrohr 40.

Der Dämpfer 2 nach Fig. 12 ist funktionstechnisch aufgebaut, wie der Dämpfer gemäß dem Ausführungsbeispiel nach Fig. 3. Im Unterschied dazu ist aber das innere Rohr 39 fest mit dem Trennkolben 10 verbunden. Das äußere Rohr 40 ist fest mit dem Ende 13 verbunden. Im Ausführungsbeispiel nach Fig. 3 hingegen ist das innere Rohr 39 mit dem Ende 13 verbunden und das äußere Rohr 40 mit dem Trennkolben 10.

Neben dem Einsatz des erfindungsgemäßen Dämpfers an Fahrrädern ist die Verwendung auch an sonstigen Zweirädern möglich. Insbesondere kann der erfindungsgemäße Dämpfer auch an Elektrofahrrädern und elektrounterstützten Fahrrädern sowie auch an sonstigen motorbetriebenen Zweirädern erfolgen.

### Bezugszeichenliste:

- 1: Dämpfer
- 2: Pull-Shock-Dämpfer
- 3: Federeinrichtung
- 4: Dämpfereinrichtung
- 5: Positivfeder
- 6: Negativkammer
- 7: Ölkammer, erste Ölkammer
- 8: Strömungskanal
- 9: zweite Ölkammer
- 10: Trennkolben
- 11: Rohrstruktur
- 12: Innenraum
- 13: Ende
- 14: Kolbenstange
- 15: Flächenanteil
- 16: Negativfeder
- 17: Positivkammer
- 18: Positivkammer
- 19: Gehäuse
- 20: Luftventil
- 21: Kanal
- 22: Kanal
- 23: Einstellventil
- 24: Drosseleinrichtung
- 25: Drosselventil
- 26: Drosselventil
- 27: Gehäuseteil
- 28: Gehäuseteil
- 29: Gehäuseteil
- 30: Einstellrad
- 31: erster Trennkolben
- 32: dritte Ölkammer
- 33: zweiter Trennkolben
- 34: Durchmesser
- 35: Länge
- 36: Umgebung
- 37: erstes Anschlussende
- 38: zweites Anschlassende
- 39: erstes Rohr
- 40: zweites Rohr
- 41: Shim
- 42: Shim
- 43: Feder
- 44: Öffnung
- 45: Abdeckkappe
- 46: Ringfläche
- 47: Drosseleinrichtung
- 48: Shim
- 49: Ventil High-Speed
- 50: Kanal
- 51: Ventil Low-Speed
- 52: Rückschlagventil
- 53: Rückschlagventil
- 54: Drosselventil Zugstufe
- 55: Bedienteil
- 56: Kabel
- 57: Ventil

## Patentansprüche

1. Dämpfer (1) für ein Fahrrad, insbesondere Pull-Shock-Dämpfer (2) für ein Fahrrad, umfassend wenigstens eine Federeinrichtung (3) und wenigstens eine Dämpfereinrichtung (4), wobei die Federeinrichtung (3) wenigstens eine Positivfeder (5) und wenigstens eine Negativfeder (16) mit wenigstens einer gasbetriebenen Negativkammer (6) umfasst, wobei die Dämpfereinrichtung (4) wenigstens eine erste Ölkammer (7) und wenigstens eine damit verbundene zweite Ölkammer (9) umfasst, wobei die Negativkammer (6) über einen Trennkolben (10) an die erste Ölkammer (7) angrenzt, wobei der Trennkolben (10) fest mit einer Kolbenstange (14) verbunden ist,
**dadurch gekennzeichnet,**
**dass** sich wenigstens eine Rohrstruktur (11) von dem Trennkolben (10) durch das Innere (12) der Negativkammer (6) bis wenigstens zu dem Ende (13) der Negativkammer (6) hin erstreckt, und das die Negativkammer gegenüber der Rohrstruktur gasdicht abgedichtet ist, und
**dass** sich die Kolbenstange (14) des Trennkolbens (10) durch die erste Ölkammer (7) hindurch nach außen erstreckt.

2. Dämpfer nach Anspruch 1, wobei die Rohrstruktur (11) wenigstens zwei miteinander gasdicht verbundene und teleskopierbare Rohre (16, 17) umfasst, die sich wenigstens von dem Kolben (10) bis zu dem Ende (13) der Negativkammer (6) hin erstrecken.

3. Dämpfer nach mindestens einem der vorhergehenden Ansprüche, wobei ein Außendurchmesser der Rohrstruktur (11, 39) größer als ein Außendurchmesser der Kolbenstange (14) ist.

4. Dämpfer nach mindestens einem der vorhergehenden Ansprüche, wobei eine wirksame Fläche der Rohrstruktur größer als eine Querschnittsfläche der Kolbenstange (14) ist.

5. Dämpfer nach mindestens einem der vorhergehenden Ansprüche, wobei sich die Rohrstruktur (11) durch das Ende (13) der Negativkammer (6) hindurch nach außen erstreckt.

6. Dämpfer nach mindestens einem der vorhergehenden Ansprüche, wobei die Positivfeder (5) wenigstens eine gasbetriebene Positivkammer (17, 18) umfasst.

7. Dämpfer nach dem vorhergehenden Anspruch, wobei ein Luftventil (20) am Gehäuse (19) vorgesehen ist, welches zur Befüllung der Negativkammer (6) und wenigstens einer Positivkammer (17, 18) dient.

8. Dämpfer nach dem vorhergehenden Anspruch, wobei das Luftventil (20) über wenigstens einen Kanal (21, 22) mit der Negativkammer (6) und der Positivkammer (17, 18) verbunden ist, um bei der Luftbefüllung in der Negativkammer (6) im Wesentlichen den gleichen Druck wie in der Positivkammer (17, 18) einzustellen.

9. Dämpfer nach mindestens einem der vorhergehenden Ansprüche, wobei zwischen der ersten Ölkammer (8) und einer zweiten Ölkammer (9) wenigstens eine einstellbare Drosseleinrichtung (24, 27) mit wenigstens einem Drosselventil (25, 26, 49, 51, 52, 53, 54) vorgesehen ist.

10. Dämpfer nach mindestens einem der vorhergehenden Ansprüche, wobei die zweite Ölkammer (23) in einem Gehäuseteil (27) mit der Positivkammer (17) angeordnet ist, wobei die zweite Ölkammer (23) durch eine erste Trenneinrichtung (31) von der Positivkammer (17) getrennt ist.

11. Dämpfer nach mindestens einem der vorhergehenden Ansprüche, wobei eine dritte Ölkammer (32) und eine zweite Positivkammer (18) vorgesehen sind, die voneinander durch eine zweite Trenneinrichtung (33) getrennt sind.

12. Dämpfer nach mindestens einem der vorhergehenden Ansprüche, wobei eine weitere Ölkammer und eine zweite Negativkammer vorgesehen sind, die voneinander durch eine weitere Trenneinrichtung getrennt sind.

13. Dämpfer nach mindestens einem der vorhergehenden Ansprüche, wobei die Progression der Positivkammer (17, 18) veränderbar ist.

14. Dämpfer nach mindestens einem der vorhergehenden Ansprüche, wobei wenigstens eine Positivkammer (17, 18) zuschaltbar angeordnet ist und/oder wobei wenigstens zwei Positivkammern (17, 18) mit unterschiedlichen Durchmessern (34) oder unterschiedlichen und/oder einstellbaren Längen (35) vorgesehen sind.

15. Dämpfer nach mindestens einem der vorhergehenden Ansprüche,wobei ein Ventil (57) zur Entlüftung der Rohrstruktur vorgesehen ist.

## Claims

1. A damper (1) for a bicycle, in particular a pull shock damper (2) for a bicycle, comprising at least one spring device (3) and at least one damper device (4), the spring device (3) comprising at least one positive spring (5) and at least one negative spring (16) with at least one gas-operated negative chamber (6), the damper device (4) comprising at least one first oil chamber (7) and at least one second oil chamber (9) connected therewith, the negative chamber (6) abutting the first oil chamber (7) via a floating piston (10), wherein the floating piston (10) is firmly connected with a piston rod (14),**characterized in that** at least one tubular structure (11) extends from the floating piston (10) through the interior (12) of the negative chamber (6) at least until the end (13) of the negative chamber (6), and that the negative chamber is sealed gas-tight relative to the tubular structure and that the piston rod (14) of the floating piston (10) extends through the first oil chamber (7) to the exterior.

2. The damper according to claim 1, wherein the tubular structure (11) comprises at least two telescopic tubes (16, 17) connected gas-tight with one another and extending at least from the piston (10) up to the end (13) of the negative chamber (6).

3. The damper according to at least one of the preceding claims wherein an outer diameter of the tubular structure (11, 39) is larger than an outer diameter of the piston rod (14).

4. The damper according to at least one of the preceding claims wherein an effective area of the tubular structure is larger than a cross-sectional area of the piston rod (14).

5. The damper according to at least one of the preceding claims wherein the tubular structure (11) extends through the end (13) of the negative chamber (6) to the exterior.

6. The damper according to at least one of the preceding claims wherein the positive spring (5) comprises at least one gas-operated positive chamber (17, 18).

7. The damper according to the preceding claim wherein an air valve (20) is provided at the housing (19) serving for filling the negative chamber (6) and at least one positive chamber (17, 18).

8. The damper according to the preceding claim wherein the air valve (20) is connected with the negative chamber (6) and the positive chamber (17, 18) through at least one duct (21, 22) to set substantially the same pressure in the negative chamber (6) and in the positive chamber (17, 18) during filling with air.

9. The damper according to at least one of the preceding claims wherein between the first oil chamber (8) and a second oil chamber (9) at least one adjustable throttle device (24, 27) with at least one throttle valve (25, 26, 49, 51, 52, 53, 54) is provided.

10. The damper according to at least one of the preceding claims wherein the second oil chamber (23) is positioned in one housing part (27) with the positive chamber (17) wherein the second oil chamber (23) is separated from the positive chamber (17) by a first separating device (31).

11. The damper according to at least one of the preceding claims wherein a third oil chamber (32) and a second positive chamber (18) are provided which are separated from one another by a second separating device (33).

12. The damper according to at least one of the preceding claims wherein another oil chamber and a second negative chamber are provided which are separated from one another by another separating device.

13. The damper according to at least one of the preceding claims wherein the progression of the positive chamber (17, 18) is variable.

14. The damper according to at least one of the preceding claims wherein at least one positive chamber (17, 18) is arranged engageable and/or wherein at least two positive chambers (17, 18) with different diameters (34) or different and/or variable lengths (35) are provided.

15. The damper according to at least one of the preceding claims wherein a valve (57) is provided for deaerating the tubular structure.

## Revendications

1. Amortisseur (1) pour vélo, notamment amortisseur à tirage (2) pour vélo, comprenant au moins un dispositif de suspension (3) et au moins un dispositif d'amortissement (4), le dispositif de suspension (3) comprenant au moins un ressort positif (5) et au moins un ressort négatif (16) avec au moins une chambre négative (6) fonctionnant au gaz, le dispositif d'amortissement (4) comprenant au moins une première chambre à huile (7) et au moins une deuxième chambre à huile (9) reliée à la première, la chambre pneumatique négative (6) étant adjacente à la première chambre à huile (7) par le biais d'un piston séparateur (10), le piston séparateur (10) étant relié fixe à une tige de piston (14),
**caractérisé en ce**
**qu'**au moins une structure tubulaire (11) est de taille telle qu'elle s'étend du piston séparateur (10), à l'intérieur (12) de la chambre pneumatique négative (6) jusqu'au moins l'extrémité (13) de la chambre pneumatique négative (6), et que la chambre pneumatique négative est hermétique au gaz par rapport à la structure tubulaire, et
**que** la tige de piston (14) du piston séparateur (10) est de taille telle qu'elle va jusqu'à l'extérieur en passant à travers la première chambre à huile (7).

2. Amortisseur selon la revendication 1, la structure tubulaire (11) comprenant au moins deux tubes (16, 17) reliés hermétiquement l'un à l'autre, télescopables, et de taille telle qu'ils s'étendent au moins du piston (10) à l'extrémité (13) de la chambre pneumatique négative (6).

3. Amortisseur selon au moins l'une quelconque des revendications précédentes, un diamètre extérieur de la structure tubulaire (11, 39) étant supérieur à un diamètre extérieur de la tige de piston (14).

4. Amortisseur selon au moins l'une quelconque des revendications précédentes, une surface efficace de la structure tubulaire étant supérieure à une aire de section de la tige de piston (14).

5. Amortisseur selon au moins l'une quelconque des revendications précédentes, la structure tubulaire (11) étant de taille telle qu'elle va jusqu'à l'extérieur en passant à travers l'extrémité (13) de la chambre pneumatique négative (6).

6. Amortisseur selon au moins l'une quelconque des revendications précédentes, le ressort positif (5) comprenant au moins une chambre positive (17, 18) fonctionnant au gaz.

7. Amortisseur selon la revendication précédente, une soupape à air (20) étant prévue sur le boîtier (19), ladite soupape servant au remplissage de la chambre pneumatique négative (6) et au moins d'une chambre pneumatique positive (17, 18).

8. Amortisseur selon la revendication précédente, la soupape à air (20) étant reliée par au moins un canal (21, 22) à la chambre pneumatique négative (6) et à la chambre pneumatique positive (17, 18) afin d'obtenir, lors du remplissage en air de la chambre pneumatique négative (6), sensiblement la même pression que dans la chambre pneumatique positive (17, 18).

9. Amortisseur selon au moins l'une quelconque des revendications précédentes, au moins un dispositif d'étranglement réglable (24, 27) étant prévu entre la première chambre à huile (8) et une deuxième chambre à huile (9), muni au moins d'une vanne d'étranglement (25, 26, 49, 51, 52, 53, 54).

10. Amortisseur selon au moins l'une quelconque des revendications précédentes, la deuxième chambre à huile (23) étant agencée dans une partie du boîtier (27) avec la chambre pneumatique positive (17), la deuxième chambre à huile (23) étant séparée de la chambre pneumatique positive (17) par un dispositif séparateur (31).

11. Amortisseur selon au moins l'une quelconque des revendications précédentes, une troisième chambre à huile (32) et une deuxième chambre pneumatique positive (18) étant prévues séparées l'une de l'autre par un deuxième dispositif séparateur (33).

12. Amortisseur selon au moins l'une quelconque des revendications précédentes, une autre chambre à huile et une deuxième chambre pneumatique négative étant prévues séparées l'une de l'autre par un autre dispositif séparateur.

13. Amortisseur selon au moins l'une quelconque des revendications précédentes, la progression de la chambre pneumatique positive (17, 18) étant modifiable.

14. Amortisseur selon au moins l'une quelconque des revendications précédentes, au moins une chambre pneumatique positive (17, 18) étant agencée commutable et/ou au moins deux chambres pneumatiques positives (17, 18) étant prévues de diamètres différents (34) ou de longueurs différentes et/ou réglables (35).

15. Amortisseur selon au moins l'une quelconque des revendications précédentes, une vanne (57) étant prévue pour purger la structure tubulaire.
